**Europäisches Patentamt**

**European Patent Office**

**Office européen des brevets**

(19)

(11) Numéro de publication: **0 065 428**
**B1**

(12) **FASCICULE DE BREVET EUROPEEN**

(45) Date de publication du fascicule du brevet:
20.03.85

(51) Int. Cl.⁴: **D 21 G 1/02,** F 16 C 13/00

(21) Numéro de dépôt: **82400624.1**

(22) Date de dépôt: **05.04.82**

(54) Rouleau à bombé variable, notamment pour industries papetières.

(30) Priorité: **09.04.81 FR 8107114**

(43) Date de publication de la demande:
**24.11.82 Bulletin 82/47**

(45) Mention de la délivrance du brevet:
**20.03.85 Bulletin 85/12**

(84) Etats contractants désignés:
**AT BE DE FR GB IT NL SE**

(56) Documents cités:
**EP - A - 0 008 814**
**FR - A - 1 373 349**

(73) Titulaire: **ARJOMARI-PRIOUX Société anonyme dite:, 3 rue du Pont-de-Lodi, F-75006 Paris (FR)**

(72) Inventeur: **Brieu, François Marie Paul, 68 rue de Buzenval, F-92210 Saint-Cloud (FR)**

(74) Mandataire: **Robert, Jean-Pierre et al, Cabinet Armengaud Jeune Casanova et Lepeudry 23, boulevard de Strasbourg, F-75010 Paris (FR)**

ACTORUM AG

## Description

La présente invention concerne les rouleaux à bombé variable, utilisés notamment dans des dispositifs de calandrage ou de pressage, par exemple dans l'industrie papetière.

Les calandres destinées à calibrer les matières en feuilles ou bandes, et notamment le papier, sont actuellement équipées de systèmes de correction de profil destinés essentiellement à pallier la déformation des rouleaux sous l'action de la pression.

Par exemple, on utilise des lisses constituées par un ensemble mécanique de plusieurs rouleaux empilés verticalement, reposant horizontalement les uns sur les autres et serrés par l'intermédiaire d'un bâti. Le papier provenant de refroidisseurs passe dans ce jeu de rouleaux afin que sa rugosité naturelle soit réduite et que son épaisseur soit régularisée. Le papier ainsi traité est dit «apprêté».

Il existe donc des systèmes permettant la modification du bombé des rouleaux. On connaît ainsi des rouleaux ayant un organe externe rotatif délimitant une surface externe de travail, et un organe interne formant un circuit de circulation de fluide. L'organe interne qui ne tourne pas délimite deux chambres dont l'une contient un fluide sous forte pression et l'autre un fluide à basse pression. De cette manière, la surface interne de l'organe externe est repoussée d'un côté et non de l'autre. Le bombé de l'organe externe peut donc être modifié. Ce système présente de nombreux inconvénients. D'abord, l'utilisation de fluide hydraulique sous forte pression nécessite des systèmes très élaborés d'étanchéité et le respect de tolérances étroites. En conséquence, le prix de ces rouleaux est très important. Enfin, le réglage obtenu ne porte que sur un nombre relativement limité d'emplacements sur la longueur du rouleau si bien que la correction obtenue est relativement grossière.

On connaît aussi des rouleaux comportant un organe externe tournant autour d'un organe interne fixe. Ce dernier délimite un certain nombre de cavités reliées par des circuits hydrauliques ou pneumatiques à un dispositif convenable de distribution. Chaque cavité est fermée, du côté tourné vers la surface interne de l'organe externe, par un piston qui peut prendre appui contre la surface interne de l'organe externe. La transmission de fluide à pression plus ou moins importante dans les diverses cavités permet l'obtention d'un bombé variable sur la longueur du rouleau, dans une zone rectiligne du tel système, dont un mode de réalisation est décrit dans le brevet français 1 373 349, présente aussi les inconvénients du système décrit précédemment, avec une réduction possible des fuites du système hydraulique ou pneumatique. Cependant, cette réduction n'est obtenue qu'au prix du respect de tolérances étroites lors de l'usinage des logements des pistons.

On connaît aussi des rouleaux à bombé variable dans lesquels une certaine correction de rouleaux qui s'échauffent au cours du fonctionnement est obtenue par soufflage localisé d'un gaz relativement froid. La contraction locale du rouleau provoque une légère modification du bombé.

Enfin, la demande de brevet européen 0 008 814 décrit un rouleau à bombé variable comprenant un organe externe tubulaire, entourant un organe interne cylindrique fixe, et monté en rotation sur les deux extrémités de ce dernier, sur lequel est disposée au moins une bande chauffante, d'étendant longitudinalement, parallèlement à une génératrice de l'organe cylindrique et sur un secteur circulaire limité de ce dernier. Cet organe interne cylindrique porte au moins une sonde électrique de température à proximité immédiate de la ou des bandes chauffantes, et au moins une sonde électrique de température du côté opposé de la ou des bandes chauffantes, ce côté opposé pouvant avantageusement être refroidi sur commande. Les sondes de température sont reliées à un dispositif de mesure de la différence de température et pilotent avec ce dernier, un circuit de chauffage électrique de la ou des bandes chauffantes, dont le chauffage est à l'origine d'une dilatation thermique longitudinale différentielle qui se produit entre les côtés respectivement chauffé et non chauffé de l'organe interne. Il se développe ainsi une flexion transversale de ce dernier, et cette flexion est transmise à l'organe externe tubulaire par les paliers.

L'invention concerne un rouleau à bombé variable, notamment pour dispositif de calandrage, qui est formé de pièces simples et robustes et qui ne nécessite aucun usinage élaboré. Le réglage est extrêmement simple. L'entretien est extrêmement réduit. En conséquence, les investissements et les coûts de fonctionnement sont extrêmement faibles. Plus précisément, l'invention concerne un rouleau à bombé variable, du type dont la forme générale extérieure délimitée par une surface externe de travail, est sensiblement celle d'un cylindre, autour de l'axe duquel la surface de travail est entraînée en rotation, et comprenant plusieurs dispositifs de chauffage, disposés le long de l'axe du cylindre, et susceptibles d'être commandés indépendamment les uns des autres par un organe de commande, pour déterminer le profil d'une partie au moins de la surface externe de travail, et qui se caractérise en ce que chaque dispositif de chauffage est disposé transversalement par rapport à l'axe du cylindre, de sorte que ces dispositifs de chauffage modifient le bombé de cette partie au moins de la surface externe de travail par l'effet de dilatations et/ou de contractions thermiques radiales.

Dans une forme préférée de réalisation, l'invention concerne un rouleau à bombé variable du type comprenant, de manière en soi connue, un organe tubulaire externe entraîné en rotation autour de son axe, et dont la surface externe délimite la surface externe de travail et un organe interne, entouré par l'organe externe, avec un jeu radial séparant la surface interne de l'organe externe et la surface externe de l'organe interne et dans lequel l'organe interne constitue un support pour les dispositifs de chauffage.

Dans ce cas l'invention concerne plus précisément un rouleau à bombé variable dont chaque dispositif de chauffage coopère avec un organe de positionnement comportant au moins une partie allongée formée d'une matière thermodilatable, et disposée sensiblement radialement entre l'organe interne et l'organe externe, de sorte que, selon que l'un au moins des dispositifs de chauffage d'un organe de positionnement soit en fonctionnement ou non, cet organe de positionnement se dilate ou se rétracte radialement et modifie le bombé de la partie correspondante de la surface externe de travail, par l'application d'une force sur une surface d'appui délimitée par la surface interne de l'organe externe.

Les organes de positionnement se présentent, par exemple, sous la forme de disques renfermant chacun au moins un dispositif de chauffage, et entourant l'organe interne. Si les dispositifs de chauffage sont électriques, et si, par exemple, les organes interne et externe sont tous deux destinés à tourner ensemble, de sorte que le bombé est alors avantageusement réglé sur tour le pourtour de la circonférence du rouleau, l'organe interne comprend alors un arbre muni de bagues collectrices permettant l'alimentation séparée des dispositifs de chauffage.

Lorsque le rouleau comprend des organes interne et externe, selon une autre variante, propre à l'invention, chaque dispositif de chauffage est un dispositif annulaire, entourant l'organe interne et sans contact avec la surface interne de l'organe externe, qui est radialement dilaté ou contracté par rayonnement ou convection.

Avantageusement, dans cette variante, des disques en matériau thermiquement isolant, entourant l'organe interne et s'étendant radialement jusqu'au voisinage de la surface interne de l'organe externe, sont chacun disposés entre deux dispositifs de chauffage adjacents.

Dans un autre mode de réalisation, l'organe externe est destiné à tourner autour de l'organe interne qui ne tourne pas, et les organes de positionnement, maintenus par l'organe interne, sont sensiblement alignés. Il est alors avanteux que l'organe interne non rotatif porte des dispositifs de guidage des organes de positionnement.

Par exemple, un patin placé entre chaque organe de positionnement et la surface interne de l'organe externe peut être guidé par l'organe interne. Dans une variante, l'organe de positionnement de forme allongée se termine par un galet du côté tourné vers la surface interne de l'organe externe, le galet prenant appui contre la surface interne et lui transmettant les forces appliquées par les organes de positionnement.

L'invention ne se limite pas aux rouleaux à bombé variable comprenant des organes externe et interne. Dans une autre variante de réalisation, propre à l'invention, la surface externe de travail du rouleau est délimitée par les surfaces latérales externes de galets cylindriques accolés et solidarisés les uns aux autres le long de l'axe de révolution par l'une au moins de leurs faces radiales et renfermant chacun au moins un dispositif de chauffage.

De préférence, chaque galet présente, sur l'une de ses faces radiales, au moins un bossage, de forme complémentaire à au moins un lamage ménagé dans l'autre face radiale du galet, au moins un bossage de l'un des galets d'extrémité et au moins un lamage de l'autre galet d'extrémité coopérant respectivement avec au moins un lamage et au moins un bossage présentés respectivement par l'une des deux cloches d'extrémité, solidaires des galets et chacune d'une portion d'arbre.

Les dilatations ou contractions radiales des galets modifient ainsi directement le profil de la surface externe de travail.

Lorsque les organes de positionnement ou les galets ont une inertie thermique trop grande, il peut être avantageux que le rouleau comporte en outre un ou plusieurs dispositifs de refroidissement, associés à certains au moins des organes de positionnement ou galets et commandés aussi par l'organe de commande, éventuellement.

Les dispositifs de refroidissement peuvent être de différents types, par exemple la circulation d'un fluide de refroidissement, le soufflage d'un gaz relativement froid, etc.

Le dispositif de chauffage peut être aussi de différents types, par exemple un ou plusieurs éléments chauffants par effet Joule, placés en contact thermique avec l'organe de positionnement ou le galet, un dispositif de chauffage direct de chaque organe de positionnement ou du galet par effet Joule, par circulation d'un courant électrique dans l'organe ou le galet lui-même, un dispositif de chauffage à la flamme, ou un dispositif de chauffage par contact avec un fluide caloporteur.

L'organe de commande peut être de tout type connu dans la technique pour le réglage du fonctionnement des dispositifs de chauffage. Il peut s'agir par exemple d'un organe de type bien connu destiné à recevoir des données représentatives de l'épaisseur de la matière en feuille traitée sur le rouleau à bombé variable, et à commander le bombé du rouleau en fonction des modifications voulues pour cette épaisseur.

D'autres caractéristiques et avantages de l'invention ressortiront mieux de la description qui va suivre, faite en référence aux dessins annexés sur lesquels:

la figure 1 est une coupe schématique d'un premier mode de réalisation de rouleau à bombé variable selon l'invention;

la figure 2 est une coupe schématique d'un second mode de réalisation de rouleau à bombé variable selon l'invention;

la figure 3 représente une variante du rouleau de la figure 2;

la figure 4 représente une autre variante de rouleau de la figure 2;

les figures 5 à 9 sont des schémas illustrant divers montages du rouleau à bombé variable selon l'invention, et

les figures 10 et 11 sont des coupes schématiques d'un troisième et d'un quatrième mode de réalisation, respectivement, de rouleau à bombé variable selon l'invention.

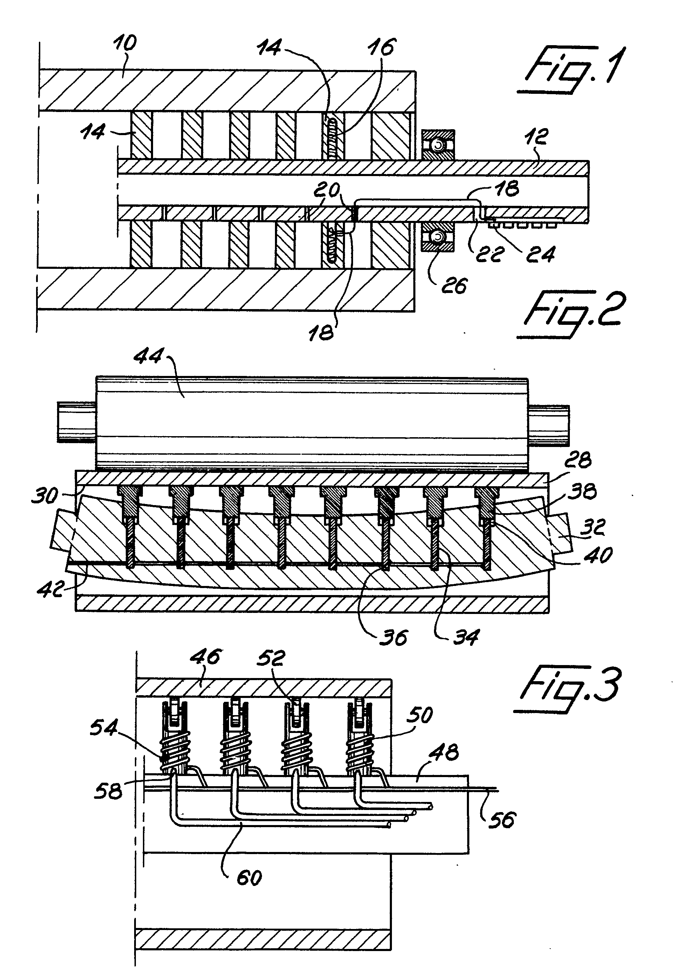

La figure 1 est une coupe schématique d'une extrémité d'un rouleau à bombé variable selon l'invention. Ce rouleau comporte essentiellement un organe externe 10 et un organe interne 12. L'organe 10 a une surface externe de travail, destinée par exemple à être au contact d'une feuille ou bande de papier. La surface interne de l'organe externe 10 qui est sous forme d'un cylindre, est au contact d'organes 14 de positionnement portés par l'organe interne 12. Chaque organe 14 a la forme d'un disque. Chaque disque 14 contient un ou plusieurs dispositifs 16 de chauffage. Le dispositif unique 16 ou tous les dispositifs 16 de chauffage d'une même disque 14 sont alimentés par un fil 18 qui passe par des trous 20 et 22 formés dans la paroi de l'organe interne 12 et dans le trou central de cet organe interne et revient à une bague collectrice 24 portée par l'extrémité de l'organe interne 12 qui dépasse. Dans ce mode de réalisation, le fil 18 est relié à une extrémité de chaque élément 16 de chauffage du disque 14 correspondant, et l'autre extrémité de chaque élément est à la masse. Cependant, deux ou plusieurs fils 18 peuvent alimenter l'élément ou plusieurs éléments de chaque disque 14.

Bien qu'on n'ait représenté d'éléments 16 de chauffage que pour le disque 14 qui est placé le plus à droite sur la figure 1, tous les autres disques 14 ont aussi des éléments de chauffage reliés à une bague collectrice 24.

A chaque extrémité, l'organe intérieur ou l'organe extérieur est porté par un palier, représenté sous forme d'un simple roulement 26, à titre purement illustratif.

Lors du fonctionnement, l'ensemble solidaire formé par l'organe externe 10, l'organe interne 12 et les disques intermédiaires 14 tourne comme un tout, soit en étant entraîné par un moteur solidaire de l'organe interne 12 ou de l'organe externe 10, soit par contact avec une feuille mobile traitée sur ce rouleau.

Si la feuille ou bande traitée présente une épaisseur trop grande à un emplacement quelconque sur sa largeur, ce fait est détecté par des dispositifs n'entrant pas dans le cadre de l'invention et est transmis à un organe de commande, non représenté, associé au rouleau à bombé variable. Cet organe de commande détermine quel est le disque 14 ou quels sont les disques 14 qui doivent être chauffés, et quelle doit être l'élévation de température du disque 14 correspondant. Cet organe de commande règle alors soit l'intensité du courant transmis dans l'élément de chauffage soit la durée de son alimentation afin que le disque correspondant 14 s'échauffe et se dilate, notamment en direction radiale, si bien que, à l'emplacement de ce disque, le rouleau a tendance à prendre un diamètre accru.

La figure 2 représente un autre mode de réalisation de l'invention. Le rouleau à bombé variable comporte un organe externe 28 de forme cylindrique, ayant une surface externe de travail, destinée à être au contact de la feuille ou bande à traiter, et une surface interne d'appui 30. L'organe interne 32 est fixe. On l'a représenté avec une forme sensiblement cylindrique afin qu'il ait une résistance mécanique élevée. Cependant, on a aussi indiqué qu'il avait une forme légèrement arrondie non parce qu'il est usiné à cette forme mais parce que, sous l'action des forces appliquées par les organes de positionnement, il a tendance à prendre une telle forme, bien qu'on ait exagéré la déformation sur la figure 2. L'organe fixe 32 loge donc, dans des alésages transversaux 34, des organes allongés 36 de positionnement. L'extrémité externe de ces derniers est en appui contre un patin 38 qui peut coulisser dans un chambrage 40 formé près de la surface de l'organe interne 32.

Bien qu'on ne les ait pas représentés, des éléments de chauffage sont évidemment incorporés aux organes 36 de positionnement. Cependant, les organes 36 eux-mêmes peuvent constituer des éléments de chauffage, par exemple par circulation directe d'un courant à l'intérieur. On a indiqué des canaux 42 destinés au passage des fils électriques alimentant les éléments de chauffage des organes 36 de positionnement.

Les patins 38 ont une surface externe, au contact de la surface 30 d'appui de l'organe externe 28, qui se conforme à la surface cylindrique et ils sont avantageusement formés d'une matière ayant un faible coefficient de frottement.

On a aussi indiqué un rouleau 44 destiné à coopèrer avec le rouleau à bombé variable selon l'invention, par exemple dans une lisse.

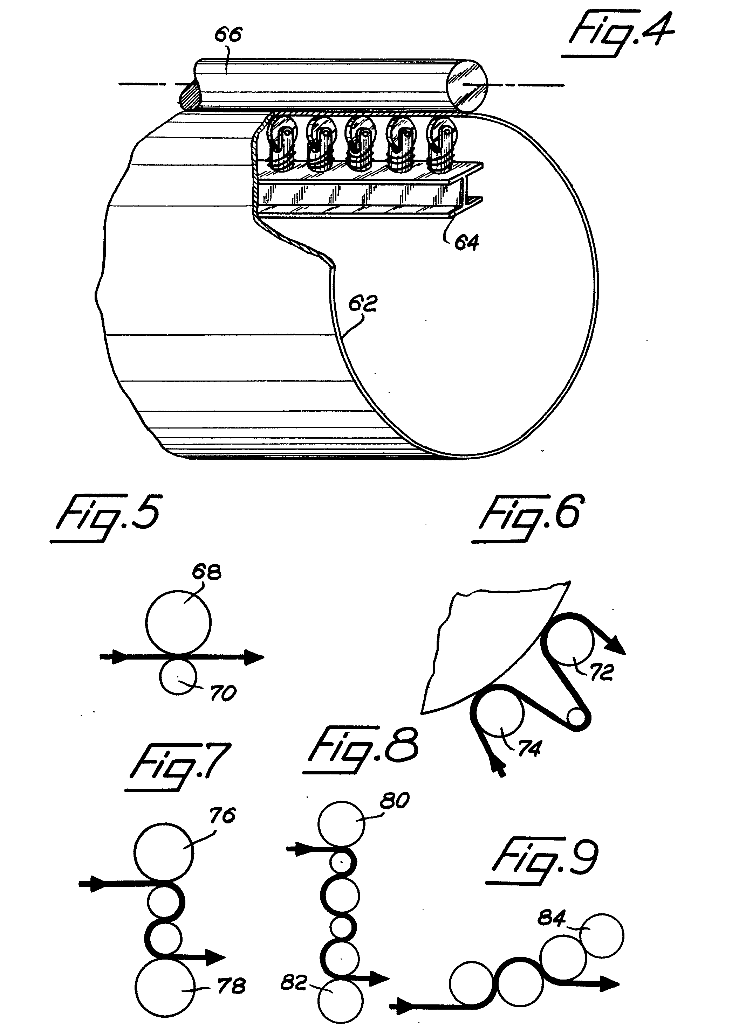

La figure 3 représente une variante du rouleau de la figure 2. Plus précisément, ce rouleau comporte un organe externe rotatif 46 de forme cylindrique, un organe interne fixe 48 et des organes 50 de positionnement. L'extrémité externe de chaque organe 50 a une forme de fourche et porte un galet rotatif 52 destiné à transmettre à la surface interne de l'organe 46 des forces qui lui sont transmises par l'organe 50 de positionnement.

On a aussi représenté sous forme schématique un dispositif 54 de chauffage associé à chaque organe 50 et relié par des fils 56 à un organe convenable de commande.

La référence 58 désigne une buse de soufflage d'air associée à chaque organe de positionnement. Cette buse est reliée par une tuyauterie 60 à une réserve de gaz relativement froid, par exemple d'air à température ambiante.

Lors du fonctionnement du rouleau de la figure 2 ou de celui de la figure 3, lorsque les dispositifs de chauffage de différents organes de positionnement fonctionnent, l'organe correspondant de positionnement est repoussé contre la surface interne de l'élément externe si bien qu'une plus grande force a tendance à être appliquée par la surface externe vers le rouleau placé en regard, comme dans le mode de réalisation de la figure 1. Cependant, les forces ne sont appliquées que sensiblement suivant une génératrice, c'est-à-dire juste en face du rouleau placé en regard.

En outre, dans la variante de la figure 3, lorsqu'il s'avère que l'épaisseur de la feuille ou bande de matière traitée par le rouleau devient insuffisante à un endroit et que l'organe de positionnement ne se contracte pas suffisamment vite, un courant d'air froid peut être transmis par la buse correspondante 58 afin que cette contraction de l'organe de positionnement soit accélérée. Ainsi, le mode de réalisation de la figure 3 a une sensibilité supérieure à celle du mode de réalisation de la figure 2. Il faut cependant noter qu'on peut aussi utiliser des dispositifs appropriés de refroidissement dans les modes de réalisation des figures 1 et 2.

La figure 4 représente une autre variante très analogue à celle de la figure 3. La différence essentielle est due au fait que l'organe externe 62 a cette fois une très faible épaisseur et a donc une grande souplesse. On a représenté l'organe interne fixe sous forme d'une simple poutre 64. Dans cette variante, la matière passe entre l'organe externe 62 et le rouleau 66. L'organe externe 62 de ce mode de réalisation peut avoir une faible épaisseur. Le profil donné par les galets peut être très différent d'un profil rectiligne. En outre, l'organe externe 62 peut avoir une section autre que circulaire, étant donné sa grande souplesse.

Dans les différents modes de réalisation considérés précédemment, l'organe externe est avantageusement sous forme d'une chemise formée d'acier ou de fonte aciérée. Les organes de positionnement sont avantageusement formés d'une matière ayant un coefficient de dilatation linéaire relativement grand, par exemple de laiton, de bronze ou de divers alliages à base de cuivre. Etant donné la bonne conductibilité thermique de ces matières, la sensibilité de commande est accrue.

On considère maintenant des exemples d'appareil de calandrage, sous forme de calandres ou de lisses, pouvant comprendre un ou plusieurs rouleaux à bombé variable selon l'invention. La figure 5 représente le passage simple d'une matière en feuille ou bande dans l'emprise de deux rouleaux 68, 70. Il est avantageux qu'un seul rouleau tel que 68 soit du type selon l'invention, mais ils peuvent tous deux être à bombé variable. La figure 6 représente un mode de réalisation dans lequel il suffit normalement qu'un seul des rouleaux 72, 74, placés au contact d'un plus grand rouleau, soit du type selon l'invention. Il s'agit de préférence du rouleau 72 placé du côté de sortie de la feuille.

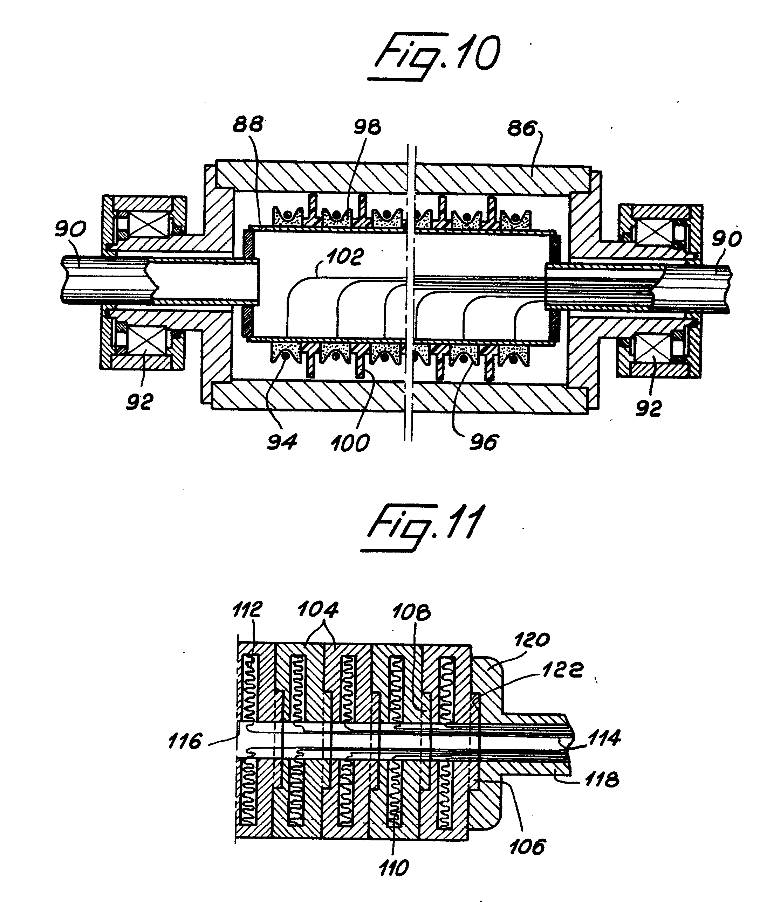

La figure 7 représente un montage classique dans lequel le rouleau selon l'invention occupe l'une des positions 76, 78, ou les deux.

La figure 8 représente une variante du dispositif de la figure 7, dans laquelle la feuille ou bande passe par cinq emprises. Il suffit que les deux rouleaux d'extrémité 80, 82 soient réalisés selon l'invention.

Enfin, la figure 9 représente une autre possibilité d'utilisation dans laquelle le rouleau 84 selon l'invention n'est pas directement au contact de la feuille ou bande à traiter. Il repousse simplement un rouleau voisin qui est lui-même au contact de la feuille.

L'invention n'est pas limitée aux modes de réalisation dans lesquels des organes de positionnement, coopérant avec les dispositifs de chauffage, viennent au contact de la face d'appui que constitue la surface interne de l'organe externe rotatif, dont la surface externe délimite la surface de travail du rouleau.

En effet, sur le mode de réalisation représenté sur la figure 10, on retrouve un organe externe 86, essentiellement constitué d'une virole cylindrique entourant un organe interne 88 tubulaire, et monté en rotation autour de ce dernier, immobilisé par deux supports d'extrémité fixes (non représentés) sur lesquels sont ancrés les deux tronçons d'arbre d'extrémité 90 solidaires de l'organe interne 88, grâce à deux paliers 92, représentés sour la forme de roulements faisant simultanément fonction de butées axiales, et conformément à des montages bien connus, qu'il n'est pas nécessaire de décrire davantage. Des dispositifs de chauffage indépendants, constitués chacun d'une résistance électrique blindée annulaire 94, reçue dans une cavité 96 ouverte vers la face latérale d'un élément de support 98 annulaire, réalisé en une matière isolante ou conductrice, sont montés autour de l'organe interne tubulaire 88 et régulièrement espacés longitudinalement sur ce dernier, dans l'espace séparant la surface externe de l'organe interne 88 et la surface interne de l'organe externe 86. Des disques 100, en un matériau thermiquement isolant, sont interposés entre deux dispositifs de chauffage adjacents, et s'étendant radialement jusqu'au voisinage de la surface interne de l'organe externe 86, de façon à délimiter plus précisément sur ce dernier, des bandes de surfaces annulaires adjacentes sensibles à l'échauffement par rayonnement et convection produit par des dispositifs de chauffage disposés radialement à l'intérieur et en correspondance. Chaque résistance blindée 94 est alimenté par un fil électrique 102 traversant le support 98 correspondant à la paroi de l'organe interne tubulaire 88 et s'étendant axialement dans ce dernier et au travers d'un tronçon d'arbre d'extrémité 90 vers le dispositif de commande (non représenté). Dans ce mode de réalisation, c'est donc la paroi de l'organe externe 86 qui se dilate et se contracte directement sous l'effet des dispositifs de chauffage avec lesquels l'organe externe 86 n'a aucun contact matériel.

Sur la figure 10, la distance radiale séparant chaque résistance blindée 94 et chaque support 98 de la surface interne de l'organe externe 86 a été fortement exagérée, dans un but de clarté du dessin, mais il doit être compris qu'en réalité, cette distance radiale est faible.

Sur la figure 11, on a représenté un autre mode de réalisation, dans lequel le rouleau à bombé variable est essentiellement constitué de plusieurs galets cylindriques identiques 104, en un matériau présentant un bon coefficient de dilatation thermique, accolés et solidarisés les uns aux autres, par exemple par boulonnage, le long de leurs faces radiales par rapport à l'axe de révolution du rouleau, confondu avec les axes des galets 104. La hauteur de chaque galet 104 est notablement inférieure à son diamètre, et chaque galet 104 présente, sur l'une de ses faces radiales, un bossage cylindrique coaxial 106, de forme complémentaire à un lamage cylindrique coaxial 108 usiné dans l'autre face radiale du galet 104, de sorte qu'en position accolée, chaque galet 104, sauf les deux se trouvant aux extrémités de la suite de galets, soit reçu par son bossage 106 dans le lamage 108 du galet adjacent d'un côté, et reçoive dans son lamage 108 le bossage 106 du galet adjacent de l'autre côté.

On obtient ainsi un excellent positionnement relatif des galets 104, dont les surfaces latérales externes constituent la surface continue externe de travail du rouleau. Un chambrage annulaire 110, usiné dans chaque galet 104, reçoit un dispositif de chauffage, comprenant une résistance électrique blindée 112, alimentée par un fil 114 débouchant radialement dans l'alésage central 116 du galet 104 correspondant et s'étendant axialement dans l'une des deux portions d'arbre d'extrémité 118, grâce auxquelles le rouleau est monté en rotation. Chacune des portions d'arbre 118 est solidaire d'une cloche d'extrémité, telle que 120, solidarisée à l'une des extrémités de la suite des galets 104. L'une des cloches d'extrémité (120) présente, sur sa face radiale tournée vers les galets 104, un lamage cylindrique coaxial 122, dans lequel est reçu le bossage 106 du galet 104 à l'extrémité correspondante de la série, tandis que l'autre cloche (non représentée) est munie, sur sa face radiale tournée vers les galets 104, d'un bossage cylindrique coaxial reçu dans le lamage 108 du galet à l'autre extrémité correspondante de la série des galets 104 accolés. Dans cette réalisation, les dilatations et contractions thermiques radiales des galets 104 déterminent directement le profil de la surface de travail du rouleau.

Bien qu'on ait décrit une commande électrique de chauffage des organes de positionnement, d'autres systèmes conviennent aussi. Par exemple, lorsque les organes de positionnement reçoivent un fluide caloporteur, le débit de fluide dans chaque organe peut être réglé à distance. Cette disposition permet l'utilisation d'une réserve de fluide à une seule température. Cependant, on peut aussi régler la température de chaque organe par réglage de la température du fluide qui y circule. Dans un mode de réalisation avantageux, chaque organe de positionnement comporte un circuit de fluide monté en dérivation par rapport à un circuit principal et une servo-valve ou une électrovalve associée à chaque organe et pilotée par des signaux électriques afin que le fluide circule ou non dans le circuit propre à chaque organe.

Ainsi, l'invention concerne des rouleaux à bombé variable qui sont très sensibles, très faibles et peu coûteux étant donné la réalisation mécanique simple des différents éléments. Aucune opération ne nécessite le respect de tolérances étroites. En particulier, les organes de positionnement peuvent être montés de façon réglable, par exemple par simple vissage dans des trous taraudés. De cette manière, le réglage initial des organes de positionnement peut être facilement réalisé.

Bien qu'on ait décrit l'invention en se référant à la fabrication des feuilles ou bandes de papier, elle a d'autres applications dans des domaines différents, mettant en oeuvre des rouleaux, par exemple le laminage, l'impression, le pressage. On peut aussi l'utiliser pour le traitement des feuilles ou bandes d'aluminium, de fer, de verre ou des textiles par exemple. On peut aussi l'utiliser dans les presses d'impression, notamment pour les rouleaux d'encrage.

Il est bien entendu que l'invention n'a été décrite et représentée qu'à titre d'exemple préférentiel et qu'on pourra apporter toute équivalence technique dans ses éléments constitutifs sans pour autant sortir de son cadre.

**Revendications**

1. Rouleau à bombé variable, notamment pour un dispositif de calandrage, du type dont la forme générale extérieure délimitée par une surface externe de travail, est sensiblement celle d'un cylindre autour de l'axe duquel la surface externe de travail est entraînée en rotation et comprenant plusieurs dispositifs de chauffage (16, 54, 94, 112) disposés le long de l'axe du cylindre et susceptibles d'être commandés independemment les uns des autres par un organe de commande, pour déterminer le profil d'une partie au moins de la surface externe de travail, caractérisé en ce que chaque dispositif de chauffage (16, 54, 94, 112) est disposé transversalement par rapport à l'axe du cylindre de sorte que ces dispositifs de chauffage modifient le bombé de ladite partie au moins de la surface externe de travail par l'effet de dilatations et/ou contractions thermiques radiales.

2. Rouleau selon la revendication 1, caractérisé en ce qu'il comprend un organe tubulaire externe (10, 28, 46, 62, 86) entraîné en rotation autour de son axe, et dont la surface externe délimite ladite surface externe de travail, et un organe interne (12, 32, 48, 64, 88) entouré par l'organe externe, avec un jeu radial séparant la surface interne de l'organe externe de la surface externe de l'organe interne, et constituant un support pour les dispositifs de chauffage (16, 54, 94).

3. Rouleau selon la revendication 2, caractérisé en ce que chaque dispositif de chauffage (16, 54) coopère avec un organe de positionnement (14, 36, 50) comportant au moins une partie allongée formée d'une matière thermodilatable, et disposé sensiblement radialement entre l'organe interne (12, 32, 48) et l'organe externe (10, 28, 46) de sorte que, selon que l'un au moins des dispositifs de chauffage (16, 54) d'un organe de positionnement (14, 36, 50) est en fonctionnement ou non, cet organe de positionnement se dilate ou se rétracte radialement et modifie le bombé de la partie correspondante de la surface externe de l'organe externe (10, 28, 46) par l'application d'une force sur la surface d'appui (30) délimitée par la surface interne de l'organe externe (10, 28, 46).

4. Rouleau selon la revendication 3, caractérisé en ce que chaque organe de positionnement est un disque (14) renfermant au moins un dispositif de chauffage (16) et entourant l'organe interne (12).

5. Rouleau selon la revendication 2, caractérisé en ce que chaque dispositif de chauffage est un dispositif annulaire (94, 98), entourant l'organe interne (88), et sans contact avec la surface interne de l'organe externe (86) qui est radialement dilaté et contracté par rayonnement et convection.

6. Rouleau selon la revendication 5, caractérisé en ce que des disques (100) en matériau thermiquement isolant, entourant l'organe interne (88) et s'étendant radialement jusqu'au voisinage de la surface interne de l'organe externe (86) sont chacun disposés entre deux dispositifs de chauffage adjacent (94-98).

7. Rouleau selon l'une des revendications 2 à 6, caractérisé en ce que l'organe externe (10) et l'organe interne (12) sont destinés à tourner ensemble.

8. Rouleau selon l'une des revendications 2 à 6, caractérisé en ce que l'organe externe (28, 46, 62, 86) est destiné à tourner autour de l'organe interne (32, 48, 64, 88) qui ne tourne pas.

9. Rouleau selon l'une des revendications 7 et 8, caractérisé en ce que le bombé est réglé sur tout le pourtour de sa circonférence.

10. Rouleau selon la revendication 8 telle que rattachée à la revendication 3, caractérisé en ce que les organes de positionnement (36, 50) sont sensiblement alignés.

11. Rouleau selon la revendication 10, caractérisé en ce que l'organe interne (32) porte des dispositifs de guidage (34) des organes de positionnement (36).

12. Rouleau selon la revendication 11, caractérisé en ce qu'il comporte un patin (38) placé entre chaque organe de positionnement (36) et la surface interne (30) de l'organe externe (28).

13. Rouleau selon la revendication 10, caractérisé en ce que chaque organe de positionnement (50) comporte un organe allongé terminé par un galet (52) du côté tourné vers la surface interne de l'organe externe (46).

14. Rouleau selon la revendication 1, caractérisé en ce que la surface externe de travail est délimitée par les surfaces latérales externes de galets cylindriques (104) accolés et solidarisés les uns aux autres, le long de l'axe de révolution, par l'une au moins de leurs faces radiales et renfermant chacun au moins un dispositif de chauffage (112).

15. Rouleau selon la revendication 14, caractérisé en ce que chaque galet (104) présente, sur l'une de ses faces radiales, au moins un bossage (106), de forme complémentaire à au moins un lamage (108) ménagé dans l'autre face radiale de galet (104), au moins un bossage (106) de l'un des galets (104) d'extrémité et au moins un lamage (108) de l'autre galet (104) d'extrémité coopérant respectivement avec au moins un lamage (122) et au moins un bossage présentés chacun par l'une des deux cloches d'extrémité (120) solidaires des galets (104) et chacune d'une portion d'arbre (118).

16. Rouleau selon l'une des revendications 1 à 15, caractérisé en ce que les dispositifs de chauffage sont électriques, et comprennent par exemple des résistances blindées (94, 110).

17. Rouleau selon l'une des revendications 1 à 16, caractérisé en ce qu'il comprend au moins un dispositif de refroidissement associé à au moins un dispositif de chauffage, et commandé par l'organe de commande.

## Claims

1. Controlled deflection roll, for use in particular with a calendering apparatus, of the type whose general outer shape defined by an external work surface, is substantially that of a cylinder about the axis of which said external work surface is driven in rotation, and comprising a plurality of heating devices (16, 54, 94, 112) disposed along the axis of the cylinder and adapted to be controlled independently from one another by a control member, to determine the profile of at least part of the external work surface, characterised in that every heating device (16, 54, 94, 112) is disposed transversely with respect to the axis of the cylinder so that said heating devices modify the curving of at least said part of the external work surface through the effect of radial thermal expansion and/or shrinkage.

2. Roll according to claim 1, characterised in that it comprises an external tubular member (10, 28, 46, 62, 86) driven in rotation about its axis, and whose external surface defines said external work surface, and an internal member (12, 32, 48, 64, 88) surrounded by said external member, with a radial play separating the internal surface of said external member from the external surface of said internal member, and constituting a support for said heating device (16, 54, 94).

3. Roll according to claim 2, characterised in that every heating device (16, 54) cooperates with a positioning member (14, 36, 50) which comprises at least an elongated part in thermo-expandable material, and is disposed substantially radially between the internal member (12, 32, 48) and the external member (10, 28, 46) so that, depending on whether or not at least one of the heating devices (16, 54) of a positioning member (14, 36, 50) is in operation, said positioning member expands or shrinks radially and modifies the curving of the corresponding part of the external surface of the external member (10, 28, 46) by applying a force on the bearing surface (30) defined by the internal surface of said external member (10, 28, 46).

4. Roll according to claim 3, characterised in that each positioning member is a disk (14) which contains at least one heating device (16) and surrounds the internal member (12).

5. Roll according to claim 2, characterised in that each heating device is an annular device (94, 98), which surrounds the internal member (88) without any contact with the internal surface of the external member (86) which is expanded and shrunk radially by radiation and convection.

6. Roll according to claim 5, characterised in that disks (100) in heat-insulating material, surrounding the internal member (88) and extending radially as far as close to the internal surface of the external member (86) are each placed between two adjacent heating devices (94-98).

7. Roll according to one of claims 2 to 6, characterised in that the external member (10) and the internal member (12) are designed to rotate together.

8. Roll according to one of claims 2 to 6, characterised in that the external member (28, 46, 62, 86) is designed to rotate about the internal member (32, 48, 64, 88) which is not rotary.

9. Roll according to one of claims 7 and 8, characterised in that the curving or deflecting is controlled over its entire periphery.

10. Roll according to claim 8 such at it is made to depend of claim 3, characterised in that the positioning members (36, 50) are substantially in alignment.

11. Roll according to claim 10, characterised in that the internal member (32) is equipped with means (34) of guiding the positioning members (36).

12. Roll according to claim 11, characterised in that it comprises a sole-plate (38) placed between every positioning member (36) and the external surface (30) of the internal member (28).

13. Roll according to claim 10, characterised in that every positioning member (50) comprises an elongated member ending with a runner (52) on its side facing the internal surface of the external member (46).

14. Roll according to claim 1, characterised in that the external work surface is defined by the external side surfaces of the cylindrical runners (104) joined together side by side, along the revolving axis, by one at least of their radial faces, each one containing at least one heating device (112).

15. Roll according to claim 14, characterised in that every runner (104) has, on one of its radial faces, at least one boss (106) of shape complementary to at least one facing (108) provided in the other radial face of runner (104), at least one boss (106) of one of the end runers (104) and at least one facing (108) of the other end runner (104) cooperating respectively with at least a facing (122) and at least a boss, each one presented by one of the two bell-like end elements (120) integral with the runners (104), and each of said bell-like elements being integral with a portion of shaft (118).

16. Roll according to one of claims 1 to 15, characterised in that the heating devices are electrical and comprise for example sheathed elements (94, 110).

17. Roll according to one of claims 1 to 16, characterised in that it comprises at least one cooling device associated to at least one heating device, and controlled by said control member.

## Patentansprüche

1. Walze mit einstellbarer Durchbiegung, insbesondere für ein Kalanderwerk, bei dem die von einer äusseren Arbeitsfläche begrenzte Aussenform durch einen Zylinder gebildet ist, um dessen Achse die äussere Arbeitsfläche verdrehbar ist und mehrere Heizvorrichtungen (16, 54, 94, 112) enthält, die längs der Zylinderachse angeordnet und unabhängig voneinander durch ein Steuerglied anzusteuern sind, um zumindest einen Teil des Profils der äusseren Arbeitsfläche zu bestimmen, dadurch gekennzeichnet, dass jede Heizvorrichtung (16, 54, 94, 112) quer zur Zylinderachse angeordnet ist, derart, dass die Heizvorrichtungen durch radiale thermische Dehnung und/oder Kontraktionen die Durchbiegung zumindest des genannten Teils der äusseren Arbeitsfläche modifizieren.

2. Walze nach Anspruch 1, dadurch gekennzeichnet, dass sie ein äusseres rohrförmiges Organ (10, 28, 46, 62, 86) enthält, das um seine Achse drehantreibbar ist und dessen Aussenfläche die genannte äussere Arbeitsfläche begrenzt, und dass sie ein inneres Organ (12, 32, 48, 64, 88) enthält, das von dem äusseren Organ mit einem Radialspiel umgeben ist, das die Innenfläche des äusseren Organs von der Aussenfläche des inneres Organs trennt, und zwar unter Bildung eines Trägers für die Heizvorrichtungen (16, 54, 94).

3. Walze nach Anspruch 2, dadurch gekennzeichnet, dass jede Heizvorrichtung (16, 54) mit einem Positionierorgan (14, 36, 50) zusammenwirkt, das zumindest ein verlängertes Teil aus einem sich bei Wärme ausdehnenden Material aufweist und im wesentlichen radial zwischen dem inneren Organ (12, 32, 48) und dem äusseren Organ (10, 28, 46) angeordnet ist, so dass, wenn zumindest eine der Heizvorrichtungen (16, 54) eines Positionierorgans (14, 36, 50) in Funktion ist oder nicht, dieses Positionierorgan sich radial ausdehnt oder zusammenzieht und die Durchbiegung des korrespondierenden Teils der Aussenfläche des äusseren Organs (10, 28, 46) verändert, indem eine Kraft auf die Druckfläche (30) ausgeübt wird, die von der Innenfläche des äusseren Organs (10, 28, 46) begrenzt wird.

4. Walze nach Anspruch 3, dadurch gekennzeichnet, dass jedes Positionierorgan eine Scheibe (14) ist, die zumindest eine Heizvorrichtung (16) einschliesst und das innere Organ (12) umgibt.

5. Walze nach Anspruch 2, dadurch gekennzeichnet, dass jede Heizvorrichtung als Ring (94, 98) ausgebildet ist, der das innere Organ (88) umgibt und ohne Kontakt mit der Innenfläche des äusseren Organs (86) steht, das durch Strahlung oder Konvektion radial gedehnt oder zusammengezogen wird.

6. Walze nach Anspruch 5, dadurch gekennzeichnet, dass Scheiben (100) aus thermisch isolierendem Material das innere Organ (88) umgeben und sich radial bis in die Nähe der Innenfläche des äusseren Organs (86) erstrecken und dass diese Scheiben (100) jeweils zwischen zwei anliegenden Heizvorrichtungen (94-98) angeordnet sind.

7. Walze nach einem der Ansprüche 2 bis 6, dadurch gekennzeichnet, dass das äussere Organ (10) und das innere Organ (12) sich zusammen verdrehen.

8. Walze nach einem der Ansprüche 2 bis 6, dadurch gekennzeichnet, dass das äussere Organ (28, 46, 62, 86) um das sich nicht drehende innere Organ (32, 48, 64, 88) verdrehbar ist.

9. Walze nach einem der Ansprüche 7 und 8, dadurch gekennzeichnet, dass die Durchbiegung über den gesamten äusseren Umfang der Walze regelbar ist.

10. Walze nach Anspruch 8 sowie nach Anspruch 3, dadurch gekennzeichnet, dass die Positionierorgane (36, 50) im wesentlichen in einer Linie liegen.

11. Walze nach Anspruch 10, dadurch gekennzeichnet, dass das innere Organ (32) Führungsglieder (34) der Positionierorgane (36) trägt.

12. Walze nach Anspruch 11, dadurch gekennzeichnet, dass sie einen Gleitschuh (38) aufweist, der zwischen jedem Positionierorgan (36) und der Innenfläche des äusseren Organs (28) angeordnet ist.

13. Walze nach Anspruch 10, dadurch gekennzeichnet, dass jedes Positionierorgan (50) ein verlängertes Organ trägt, das in einer Rolle (52) endet, und zwar an der zur Innenfläche des äusseren Organs (46) zugewandten Seite.

14. Walze nach Anspruch 1, dadurch gekennzeichnet, dass die äussere Arbeitsfläche durch die Aussenflächen zylindrischer Rollen (104) gebildet ist, die ihrerseits längs der Drehachse über zumindest die eine ihrer radialen Seiten miteinander verbunden sind und jeweils zumindest eine Heizvorrichtung (112) einschliessen.

15. Walze nach Anspruch 14, dadurch gekennzeichnet, dass jede Rolle (104) an einer ihrer radialen Seiten zumindest einen Vorsprung (106) aufweist, dessen Form mit zumindest einer Vertiefung (108) in der anderen radialen Seite der Rolle (104) korrespondiert, wobei zumindest ein Vorsprung (106) einer der endständigen Rollen (104) und zumindest einer Vertiefung (108) der anderen endständigen Rolle (104) zusammenwirken mit zumindest einer Vertiefung (122) und zumindest einem Vorsprung, die jeweils durch eine der endständigen Glocken (120) gebildet sind, die ihrerseits mit den Rollen (104) verbunden sind und einen Teil der Welle (118) bilden.

16. Walze nach einem der Ansprüche 1 bis 15, dadurch gekennzeichnet, dass die Heizvorrichtungen elektrisch sind und beispielsweise gekapselte Widerstände (94, 110) aufweisen.

17. Walze nach einem der Ansprüche 1 bis 16, dadurch gekennzeichnet, dass sie zumindest eine Kühlvorrichtung enthält, die mit zumindest einer Heizvorrichtung zusammenwirkt und durch das Steuerorgan steuerbar ist.

Fig.1

Fig.2

Fig.3

Fig.4

Fig.5

Fig.6

Fig.7

Fig.8

Fig.9

*Fig.10*

*Fig.11*